(19) **Europäisches Patentamt / European Patent Office / Office européen des brevets**

(11) **EP 3 139 389 A1**

(12) # EUROPEAN PATENT APPLICATION

(43) Date of publication:
08.03.2017 Bulletin 2017/10

(21) Application number: 16186763.5

(22) Date of filing: 01.09.2016

(51) Int Cl.:
*H01B 3/44* (2006.01)          *C08K 3/22* (2006.01)
*H01B 7/18* (2006.01)          *H01B 7/29* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.09.2015 JP 2015173348**

(71) Applicant: **Hitachi Metals, Ltd.
Tokyo 108-8224 (JP)**

(72) Inventors:
• IWASAKI, Makoto
  **Minato-ku, Tokyo 108-8224 (JP)**
• HASHIMOTO, Mitsuru
  **Minato-ku, Tokyo 108-8224 (JP)**
• FUJIMOTO, Kenichiro
  **Minato-ku, Tokyo 108-8224 (JP)**

(74) Representative: **Grünecker Patent- und
Rechtsanwälte
PartG mbB
Leopoldstraße 4
80802 München (DE)**

(54) **INSULATED ELECTRIC WIRE AND CABLE USING HALOGEN-FREE FLAME-RETARDANT RESIN COMPOSITION**

(57)    An insulated electric wire (10) of the present disclosure comprises a conductor (11) and an insulation layer (12) provided on an outer circumference of the conductor (11). The insulation layer (12) comprises a base polymer comprising ethylene-vinyl acetate copolymer and a metal hydroxide. The base polymer has a vinyl acetate content of 25% by mass or more and less than 50% by mass, and the metal hydroxide comprises magnesium hydroxide.

FIG.1

EP 3 139 389 A1

**Description**

BACKGROUND

The present disclosure relates to an insulated electric wire and a cable that are coated with a halogen-free flame-retardant resin composition.

People in the world have been becoming more conscious about environmental issues, and it is required to use a so-called halogen-free material that does not generate halogen gas during combustion for an insulated electric wire and a cable. For example, insulated electric wires using a halogen-free flame-retardant agent, such as metal hydroxide, are known (see, for example, Japanese Unexamined Patent Application Publication No. 2010-97881).

In order to obtain a high flame retardancy to inhibit propagation of flame in case of fire, it is required to increase a mixing ratio of such halogen-free flame-retardant agent; however, an increased mixing ratio of halogen-free flame-retardant agent leads to disadvantages of deterioration of mechanical properties, decrease in melt flow property, and thus to a limitation on usable forming machines.

Insulated electric wires and cables used for vehicles, such as railway cars and automobiles, are required to have excellent oil resistance and low-temperature properties depending on the environment of use.

It is known that it is preferable to use a polymer having a high crystallinity or a polymer having a high polarity in order to achieve excellent oil resistance, and it is preferable to use a material having a low glass transition temperature (Tg) in order to obtain excellent low-temperature properties.

SUMMARY

A polymer having a high polarity, such as ethylene-vinyl acetate copolymer (EVA) with 50% by mass or more of a vinyl acetate content (a VA content), has a disadvantage of having a high Tg, and thus having inferior low-temperature properties.

In one aspect of the present disclosure, it is desirable to provide an insulated electric wire and a cable using halogen-free flame-retardant resin composition, the insulated electric wire and the cable having excellent low-temperature properties, cold resistance, oil resistance, flame retardancy, and mechanical properties, as well as an excellent flexibility.

According to the present disclosure, an insulated electric wire and a cable using the below described halogen-free flame-retardant resin composition arc provided.

[1] An insulated electric wire in one aspect of the present disclosure comprises a conductor and an insulation layer provided around an outer circumference of the conductor. The insulation layer comprises a base polymer comprising ethylene-vinyl acetate copolymer and a metal hydroxide. The base polymer has a vinyl acetate content of 25% by mass or more and less than 50% by mass, and the metal hydroxide comprises magnesium hydroxide.

The insulation layer has: tensile properties such that a tensile strength is 10 MPa or more and a tensile elongation is 125% or more in an initial tensile test in accordance with EN60811-1-1; a heat resistance such that a tensile strength change rate is within $\pm 30\%$ and a tensile elongation change rate is within $\pm 40\%$ in a heat resistance test in accordance with EN60811-1-2; an oil resistance such that an elongation change rate is within $\pm 40\%$ in an oil resistance test in accordance with EN60811-2-1; and low-temperature properties such that a tensile elongation is 30% or more in a low-temperature test in accordance with EN60811-1-4.

The insulated electric wire has: a flame retardancy such that, in a combustion test in accordance with IEC60332-1, a distance from a bottom of an upper holder to a carbonized portion of the insulated electric wire is 50 mm or more in an upper part of the insulated electric wire and 540 mm or less in a lower part of the insulated electric wire; low smoke emission properties such that a transmissivity is 70% or more in a smoke emission test in accordance with EN61034-2; a flexibility such that, when the insulated electric wire is placed on a test stand so as to extend out by 1 m at one end of the insulated electric wire and a weight of 0.3 kg is hung from the one end, a displacement amount of the one end is 100 mm or more; and a cold resistance such that, when a bending test is performed at -40°C in accordance with EN60811-1-4 8.1, the insulated electric wire after being wound exhibits no cracks.

[2] A cable in another aspect of the present disclosure comprises: an insulated electric wire that comprise a conductor and an insulation layer provided on an outer circumference of the conductor; and a sheath provided around the insulated electric wire. The sheath comprises a base polymer comprising ethylene-vinyl acetate copolymer and a metal hydroxide. The base polymer has a vinyl acetate content of 25% by mass or more and less than 50% by mass, and the metal hydroxide comprises magnesium hydroxide.

The sheath has: tensile properties such that a tensile strength is 10 MPa or more and a tensile elongation is 125% or more in an initial tensile test in accordance with EN60811-1-1; a heat resistance such that a tensile strength change rate is within $\pm 30\%$ and a tensile elongation change rate is within $\pm 40\%$ in a heat resistance test in accordance with EN60811-1-2; an oil resistance such that an elongation change rate is within ±40% in an oil resistance test in accordance with EN60811-2-1; and low-temperature properties such that a tensile elongation is 30% or more in a low-temperature test in accordance with EN60811-1-4.

The cable has: a flame retardancy such that, in a combustion test in accordance with IEC60332-1, a distance from a bottom of an upper holder to a carbonized portion of the cable is 50 mm or more in an upper part of the cable and 540 mm or less in a lower part of the cable; low smoke emission properties such that a transmissivity is 70% or more in a smoke emission test in accordance with EN61034-2; a flexibility such that, when the cable is placed on a test stand so as to extend out by 1 m at one end of the cable and a weight of 0.5 kg is hung from the one end, a displacement amount of the one end is 100 mm or more; and a cold resistance such that, when a bending test is performed at -40°C in accordance with EN60811-1-48.1, the cable after being wound exhibits no cracks.

According to these aspects of the present disclosure, it is possible to provide an insulated electric wire and a cable using halogen-free flame-retardant resin composition that has excellent low-temperature properties, cold resistance, oil resistance, flame retardancy and mechanical properties, as well as excellent flexibility.

BRIEF DESCRIPTION OF THE DRAWINGS

A description will now be given of one embodiment of the present disclosure with reference to the accompanying drawings, in which:

FIG. 1 is a sectional view showing one embodiment of an insulated electric wire of the present disclosure; and
FIG. 2 is a sectional view showing one embodiment of a cable of the present disclosure.

DETAILED DESCRIPTION OF THE PREFERRED EMBODIMENTS

A detailed description will be given of embodiments of an insulated electric wire and a cable using a halogen-free flame-retardant resin composition of the present disclosure.

[Halogen-free Flame-retardant Resin Composition]

The halogen-free flame-retardant resin composition used in the embodiment of the present disclosure comprises a base polymer comprising ethylene-vinyl acetate copolymer as a main component and metal hydroxide added to the base polymer. The base polymer has a vinyl acetate content of 25% by mass or more and less than 50% by mass, and the metal hydroxide comprises magnesium hydroxide.

(Ethylene-Vinyl Acetate Copolymer)

The base polymer in the halogen-free flame-retardant resin composition comprises one or more types of ethylene-vinyl acetate copolymers as main components. It is preferable to comprise 1 to 3 types of ethylene-vinyl acetate copolymers, and it is more preferable to comprise 1 or 2 types of ethylene-vinyl acetate copolymers.

An ethylene-vinyl acetate copolymer content of the base polymer in the halogen-free flame-retardant resin composition preferably is 70% by mass or more, and more preferably is 100% by mass.

(Acid-modified Polyolefin Resin)

The base polymer in the halogen-free flame-retardant resin composition of the present embodiment comprises an acid-modified polyolefin resin having a glass transition temperature (Tg) of -55°C or less by the DSC method. The reason why the acid-modified polyolefin resin has a Tg of -55°C or less in the present embodiment is that cold resistance decreases if Tg exceeds -55°C.

When a large amount of metal hydroxide is added in order to provide an excellent flame retardancy to a composition, properties, such as initial elongation properties and low-temperature properties, are deteriorated. By mixing an acid-modified polyolefin resin, however, it is possible to improve the low-temperature properties.

The "acid-modified polyolefin" here means a polyolefin grafted with maleic anhydride or a copolymer of polyolefin and maleic anhydride. Polyolefin includes, for example, natural rubber, butyl rubber, ethylene-propylene rubber, ethylene-α-olefin copolymer, styrene-butadiene rubber, nitrile rubber, acrylic rubber, silicone rubber, urethane rubber, polyethylene, polypropylene, ethylene-vinyl acetate copolymer, polyvinyl acetate, ethylene-acrylic acid ethyl copolymer, ethylene-acrylic ester copolymer, polyurethane, ultralow density polyethylene, ethylene-methyl acrylate copolymer, ethylene-ethyl acrylate copolymer, ethylene-butene -1 copolymer, ethylene-hexene-1 copolymer, ethylene-octene-1 copolymer, and particularly preferable among these are ethylene-propylene rubber, ethylene-α-olefin copolymer, ethylene-ethyl acrylate copolymer, and the like.

Examples of acid include maleic acid, maleic anhydride, and fumaric acid. These acid-modified polyolefin resins may be used individually or in combination.

An addition amount of the acid-modified polyolefin resin having a glass transition temperature (Tg) of -55°C or less by the DSC method is preferably 0 parts by mass or more to 30 parts by mass or less, and more preferably 10 parts by mass or more to 20 parts by mass or less, relative to 100 parts by mass of the base polymer. If Tg exceeds 30 parts by mass, kneadability and extrudability are deteriorated.

(Vinyl Acetate Content (VA Content) in Base Polymer)

The base polymer has a vinyl acetate content of 25% by mass or more to less than 50% by mass. The vinyl acetate content in the base polymer is obtained by Formula (1) below when the number of types of polymers to be used for the base polymer is 1, 2, 3, ...k, ..., n.

$$\text{(VA content in the base polymer)} = \sum_{k=1}^{n} X_k Y_k \quad \cdots (1)$$

In Formula (1), X is a VA content (% by mass) of a polymer k, Y is a ratio of the polymer k relative to the entire base polymer, and "k" is a natural number.

In the present embodiment, if the base polymer has a VA content of less than 25% by mass, the ethylene-vinyl acetate copolymer has a high crystallinity and is good in solvent resistance, such as oil resistance, required by the EN standards; however, addition of a large amount of flame-retardant agent to achieve a high-level of flame retardancy will make it difficult to satisfy both of flame retardancy, and initial elongation properties or low-temperature properties. Also, use of the ethylene-vinyl acetate copolymer having a high crystallinity leads to reduced flexibility of a material and thus to reduced flexibility of an electric wire and a cable.

Further, if the vinyl acetate content is 50% by mass or more, the low-temperature properties are deteriorated, and also adhesion of an insulator is caused during processing of an electric wire, resulting in reduced work efficiency.

Accordingly, a halogen-free flame-retardant resin composition comprising the ethylene-vinyl acetate copolymer, as a base polymer, having a vinyl acetate content of 25% by mass or more to less than 50% by mass. More preferable is a halogen-free flame-retardant resin composition comprising an ethylene-vinyl acetate copolymer, as a base polymer, having a vinyl acetate content of 25% by mass to 30% by mass.

In the present embodiment, the base polymer may comprise, as long as required effects thereof are achieved, a polymer component other than the ethylene-vinyl acetate copolymer and the acid-modified polyolefin resin. A content of the ethylene-vinyl acetate copolymer and the acid-modified polyolefin resin is preferably 90% by mass or more, more preferably 95% by mass or more, and further preferably 100% by mass (i.e., composed only of these).

(Metal Hydroxide)

In the halogen-free flame-retardant resin composition in the embodiment of the present disclosure, it is preferable to add 150 parts by mass to 250 parts by mass of a metal hydroxide to 100 parts by mass of the base polymer. If the content of the metal hydroxide is less than 150 parts by mass, then sufficient flame retardancy cannot be obtained, whereas if the content exceeds 250 parts by mass, then elongation is reduced.

As the metal hydroxide to be used in the present embodiment, a fatty acid-treated metal hydroxide and a silane-treated metal hydroxide are simultaneously used. This is because addition of only one of these metal hydroxides cannot simultaneously satisfy flame retardancy, and initial physical properties (tensile strength, elongation), oil resistance, fuel resistance, or low-temperature properties. A fatty acid-treated and silane-treated metal hydroxide may be, of course, used singly.

In the present embodiment, the metal hydroxide may comprise, as long as required effects thereof are achieved, a different metal hydroxide other than the aforementioned metal hydroxides. Although there is no particular limitation on a type of the different metal hydroxide, it is desirable to use aluminum hydroxide or magnesium hydroxide having a greater flame-retardant effect, and also it is preferable to use one that is surface treated with at least one of organosilane coupling agent; a fatty acid, such as stearic acid; a fatty acid salt, such as stearic acid salt; a fatty acid metal salt, such as calcium stearate; or a titanate coupling agent.

(Other Additives)

In the present embodiment, it is preferable to add 0.5 parts by mass to 10 parts by mass of silicone rubber to 100 parts by mass of the base polymer. If the addition amount of silicone rubber is less than 0.5 parts by mass, die buildup occurs, whereas if the addition amount exceeds 10 parts by mass, the tensile strength is reduced. It is preferable to add 0.5 parts by mass or more to 7.5 parts by mass or less of silicone rubber relative to 100 parts by mass of the base polymer, and more preferable to add 0.5 parts by mass or more to 5 parts by mass or less of silicone rubber.

Examples of the silicone rubber to be used in the present embodiment may include dimethylpolysiloxane, methylvinyl polysiloxane, and methylphenyl polysiloxane. Since the silicone rubber has a low compatibility with ethylene-vinyl acetatc copolymer and moves to a surface portion of a kneaded material, the silicone rubber serves as an outer lubricant during wire processing, inhibits occurrence of die buildup, and also reduces a viscosity of molten resin composition to thereby reduce load during extrusion process.

When necessary, the halogen-free flame-retardant resin composition to be used in the embodiment of the present disclosure may comprise, in addition to the metal hydroxide, additives as follows: a silane coupling agent, a crosslinking agent, a crosslinking aid, a crosslinking accelerator, a surfactant, a metal chelator, an ultraviolet absorber, a light stabilizer, an antioxidant, a lubricant, a softener, a plasticizer, an inorganic filler, a compatibilizer, a stabilizer, a flame retardant aid (for example, hydroxy stannate; calcium borate; phosphorus flame-retardant agent, such as ammonium polyphosphate, red phosphorus, and phosphoric acid ester; silicone flame-retardant agent, such as polysiloxane; nitrogen flame-retardant agent, such as melamine cyanurate and cyanuric acid derivative; boric acid compound, such as zinc borate; molybdenum compound; etc.), carbon black, a colorant, and the like. Further, a different flame retardant aid may be added in order to obtain a further improved performance, within a range of not impairing the properties of the present disclosure.

There is no particular limitation on a type of the carbon black, and FT-grade carbon black and MT-grade carbon black may be used. An addition ratio of the carbon black is preferably such that a ratio between the metal hydroxide and the carbon black is 15:1 to 100:1.

(Crosslinking Method)

Examples of a crosslinking method for the halogen-free flame-retardant resin composition in the embodiment of the present disclosure may include a radiation crosslinking method in which the halogen-free flame-retardant resin composition after forming is crosslinked by irradiation with an electron beam or radiation. When performing the radiation crosslinking method, a crosslinking aid may be mixed into the halogen-free flame-retardant resin composition in advance. As the crosslinking aid, trimethylolpropane triacrylate (TMPT) and triallyl isocyanurate (TAIC (registered trademark)), for example, are preferable. In the case of crosslinking the halogen-free flame-retardant resin composition by an electron beam, an irradiation dose of the electron beam is desirably 3 Mrad or more to 13 Mrad or less. If the irradiation dose is less than 3 Mrad, crosslinking will be insufficient, whereas if the irradiation dose exceeds 13 Mrad, crosslinking will be excessive, resulting in insufficient initial tensile properties.

It may be also possible to employ a chemical crosslinking method in which the halogen-free flame-retardant resin composition after forming is heated to be crosslinked. In the case of performing the chemical crosslinking method, a crosslinking agent may be mixed into the halogen-free flame-retardant resin composition in advance. As the crosslinking agent, any organic peroxide may be employed, and possible examples of the crosslinking agent may include 1, 3-bis(2-t-butyl peroxy isopropyl) benzene and dicumyl peroxide (DCP).

(Use)

An insulated electric wire using the halogen-free flame-retardant resin composition in the embodiment of the present disclosure has excellent flame retardancy, mechanical properties, oil resistance, cold resistance and low-temperature properties as well as a high flexibility, and thus the halogen-free flame-retardant resin composition is suitably used for an insulation layer of an insulated electric wire and a sheath of a cable. The halogen-free flame-retardant resin composition is suitably used particularly for an insulation layer of an insulated electric wire for railway cars and for a sheath of a cable for railway cars.

[Insulated Electric Wire]

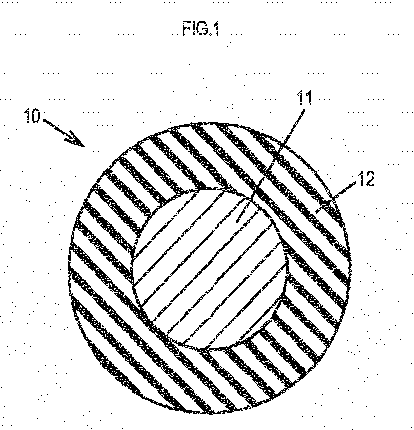

FIG. 1 is a sectional view showing one embodiment of an insulated electric wire of the present disclosure. As shown in FIG. 1, an insulated electric wire 10 of the present embodiment comprises a conductor 11 made of a general-purpose material, such as a tin-plated copper wire, and an insulation layer 12 provided on an outer circumference of the conductor 11. The conductor 11 used here may be a stranded wire. The insulation layer 12 comprises the halogen-free flame-retardant resin composition in the embodiment of the present disclosure.

In the present embodiment, the insulation layer may have a single layer structure or a multi-layer structure. A specific example of the multi-layer structure is a structure obtained by extrusion coating of the halogen-free flame-retardant resin composition for an outermost layer and extrusion coating of polyolefin resin for the remaining layers except for the outermost layer. Examples of the polyolefin resin may include low-density polyethylene, ethylene-vinyl acetate copolymer, ethylene-ethyl acrylate copolymer, ethylene-methyl acrylate copolymer, ethylene-glycidyl methacrylate copolymer, and maleic anhydride polyolefin, and one or a mixture of two or more of these may be used. Moreover, when necessary, a separator may be applied to the insulation layer, and a braid or the like may be applied to the insulated electric wire.

Usable materials for the insulation layer except for the outermost layer may include a rubber material, such as ethylene-propylene copolymer rubber (EPR), ethylene-propylene-diene terpolymer rubber (EPDM), acrylonitrile-butadiene rubber (NBR), hydrogenated NBR(HNBR), acrylic rubber, ethylene-acrylic ester copolymer rubber, ethylene octene copolymer rubber (EOR), ethylene-vinyl acetate copolymer rubber, ethylene-butene-1 copolymer rubber (EBR), butadiene-styrene copolymer rubber (SBR), isobutylene-isoprene copolymer rubber (IIR), block copolymer rubber having a polystyrene block, urethane rubber, phosphazene rubber, and one or a mixture of two or more of these may be used. Usable materials are not limited to the aforementioned polyolefin resin or rubber materials, and any material having insulating properties may be employed.

[Cable]

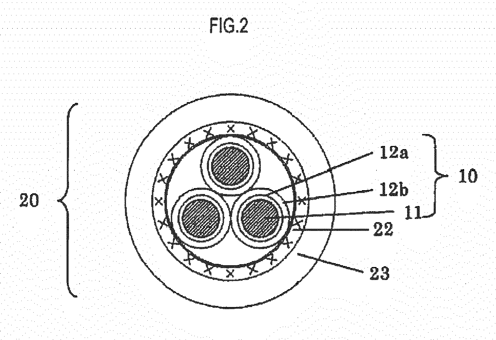

FIG. 2 is a sectional view showing one embodiment of a cable of the present disclosure. As shown in FIG. 2, a cable 20 of the present embodiment comprises stranded three core wires obtained by twisting three insulated electric wires 10 of the present embodiment, a metal braid layer 22 provided on an outer circumference of the stranded three core wires, and a sheath 23 provided on an outer circumference of the metal braid layer 22. In place of the stranded three core wires, a single core wire or stranded multi core wires other than the stranded three core wires may be employed.

The sheath 23 comprises the aforementioned halogen-free flame-retardant resin composition. In the present embodiment, the sheath may have a single layer structure or a multi-layer structure. A specific example of the multi-layer structure is a structure obtained by extrusion coating of the halogen-free flame-retardant resin composition for an outermost layer and extrusion coating of polyolefin resin for the remaining layers except for the outermost layer. Examples of the polyolefin resin may include low-density polyethylene, ethylene-vinyl acetate copolymer, ethylene-ethyl acrylate copolymer, ethylene-methyl acrylate copolymer, ethylene-glycidyl methacrylate copolymer, and maleic anhydride polyolefin, and one or a mixture of two or more of these may be used. Moreover, when necessary, a separator or the like may be applied to the sheath.

Although an example using the insulated electric wire 10 of the present embodiment is shown in the present embodiment, an insulated electric wire using a general-purpose material may also be employed.

(Examples)

Hereinafter, the cable of the present disclosure will be described in further detail by way of examples. It is to be understood that the present disclosure should not be limited at all by the examples below.

(Examples 1 to 5, Comparative Examples 1 to 5, and Conventional Example) The cable shown in FIG. 2 was produced as follows:

(1) A conductor obtained by twisting together nineteen wire strands, each having a diameter of 0.18 mm, was extrusion coated with 0.1 mm-thick polyethylene as an inner layer of an insulation layer and with 0.15 mm-thick polybutylene naphthalate as an outer layer of the insulation layer, at 150°C by means of a 65 mm extruder. Then, crosslinking is performed by electron beam radiation of 10 Mrad to obtain an insulated electric wire. By twisting together three obtained insulated electric wires, stranded three core wires were prepared.
(2) Various components shown in Table 1 were mixed, kneaded with a pressure kneader at an initial temperature of 40°C and a final temperature of 200°C, and then pelletized to obtain respective sheath materials.
(3) A metal braid layer was formed around the prepared stranded three core wires, and the resulting structure was sheathed with the respective sheath materials to obtain respective cables.
(4) The obtained respective cables were evaluated by various evaluation tests listed below. The evaluation results are shown in Table 1.

[Evaluation Test]

<Test Method of Sheath >

For evaluation of the sheath, the sheath was stripped from each of the aforementioned finished cables and was punched to obtain a Type 6 dumbbell test piece, and then the following tests were performed.

(1) Initial Tensile Test

A tensile test was performed under a condition of a tensile speed of 200 mm/min in accordance with EN60811-1-1. A target value of a tensile strength was set to 10 MPa or more, and a target value of a tensile elongation was set to 125% or more. Test pieces exhibiting these target values or more were evaluated as "○" (good), whereas test pieces exhibiting less than these target values were evaluated as " × " (not good).

(2) Heat Resistance Test

After exposure of the cables in a thermostatic bath at 120°C for 240 hours in accordance with EN60811-1-2, the sheath was stripped from each of the exposed cables, and a tensile test of the Type 6 dumbbell test piece was performed under a condition of a tensile speed of 200 mm/min. A target value of a tensile strength change rate was set to ±30%, and a target value of a tensile elongation change rate was set to ±40%. Test pieces within respective ranges of these target values were evaluated as "○," whereas test pieces beyond respective ranges of these target values were evaluated as "×."

(3) Oil Resistance Test

After immersion of the Type 6 dumbbell test pieces in a test oil IRM902 heated to 100°C for 72 hours in accordance with EN60811-2-1, a tensile test was performed under the condition of a tensile speed of 200 mm/min. A target value of an elongation change rate was set to ±40%. Test pieces within the range of the target value were evaluated as "○," whereas test pieces beyond the range were evaluated as "×."

(4) Low-temperature Test

A tensile test was performed under conditions of -40°C and a tensile speed of 30 mm/min in accordance with EN60811-1-4. A target value of a tensile elongation was set to 30% or more. Test pieces exhibiting the target value or more were evaluated as "○," whereas test pieces exhibiting less than the target value were evaluated as "×."

<Test Method of Cable>

Evaluation of the aforementioned finished cables was performed by the following tests.

(5) Combustion Test

Each of the prepared cables was tested in accordance with the IEC combustion test method (1EC60332-1). A target value of a distance from a bottom of an upper holder to a carbonized portion of the cable was set to 50 mm or more in an upper part of the cable and 540 mm or less in a lower part of the cable. Cables within the range of the target value were evaluated as "○," whereas cables beyond the range were evaluated as "×."

(6) Smoke Emission Test

Each of the prepared cables was cut into 1 m lengths, and ten bunches of seven-strand cut cables were prepared and burned using an alcohol fuel, in accordance with EN61034-2. Transmissivity was measured using emitted smoke during burning. A target value was set to 70% or more. Cables exhibiting the target value or more were evaluated as "○," whereas cables exhibiting less than the target value were evaluated as "×."

(7) Flexibility Test

Each of the cables was placed on a test stand so as to extend out by I m at one end of the cable. Then, a weight of 0.5 kg was hung from the one end, and a displacement amount of the one end was measured. A target value of the displacement amount was set to 100 mm or more. Cables exhibiting the target value or more were evaluated as "○," whereas cables exhibiting less than the target value were evaluated as "×."

(8) Presence/Absence of Die Buildup

When coating the cable with the sheath, dies were checked by visual inspection after performing 100 m of extrusion with a 65 mm extruder to confirm whether die buildup was present. Cables exhibiting die buildup were evaluated as " ✕," whereas cables exhibiting no die buildup were evaluated as "○."

(9) Cold Resistance Test

A bending test was performed on each of the prepared cables under a condition of -40°C in accordance with EN60811-1-48.1. Cables exhibiting no cracks after being wound were evaluated as "○," whereas cables exhibiting cracks after being wound were evaluated as" ✕."

(10) Contact Angle Test

A water contact angle of a surface of each of the prepared cables was measured by a static method in accordance with JIS3257. Cables exhibiting 85° or more were evaluated as "O," whereas cables exhibiting less than 85° were evaluated as" ✕ ."

(Total Evaluation)

In a total evaluation, cables rated "○" in all of the evaluations were rated "Pass (○)", whereas cables rated "✕" in any one of the evaluations were rated "Fail (✕)."

[Table 1]

| | Item | Examples | | | | | Comparative Examples | | | | Conventional Example |
|---|---|---|---|---|---|---|---|---|---|---|---|
| | | 1 | 2 | 3 | 4 | 5 | 1 | 2 | 3 | 4 | 1 |
| Composition of sheath of cable | LLDPE *1 | -- | -- | -- | -- | -- | -- | -- | -- | -- | 60 |
| | Ethylene vinyl acetate copolymer (vinyl acetate amount: 14% by mass) | -- | -- | -- | -- | -- | -- | -- | -- | 64 | -- |
| | Ethylene vinyl acetate copolymer (vinyl acetate amount: 28% by mass) *2 | 70 | 60 | 70 | 70 | 70 | 70 | 70 | -- | -- | -- |
| | Ethylene vinyl acetate copolymer (vinyl acetate amount: 46% by mass) *3 | 15 | 20 | 15 | 15 | 15 | 15 | 15 | 15 | 35 | 15 |
| | Ethylene vinyl acetate copolymer (vinyl acetate amount: 60% by mass) *4 | -- | -- | -- | -- | -- | -- | -- | 70 | -- | -- |
| | Maleic acid-modified polyolefin (Tg: -65°C) *5 | -- | -- | -- | -- | -- | -- | -- | 15 | -- | 25 |
| | Maleic acid-modified polyolefin (Tg: -65°C) *6 | 15 | 20 | 15 | 15 | -- | 15 | 15 | -- | -- | -- |
| | Maleic acid-modified polyolefin (Tg: -55°C) *13 | -- | -- | -- | -- | 15 | -- | -- | -- | -- | -- |
| | Maleic acid-modified polyolefin (Tg: -50°C) | -- | -- | -- | -- | -- | -- | -- | -- | 1 | -- |
| | Silane and fatty acid-treated magnesium hydroxide *7 | -- | -- | -- | 200 | -- | -- | -- | 200 | -- | 180 |
| | Silane-treated magnesium hydroxide *8 | 80 | 80 | 80 | -- | 80 | -- | 200 | -- | 100 | -- |
| | Fatty acid-treated magnesium hydroxide *9 | 120 | 120 | 120 | -- | 120 | 200 | -- | -- | 150 | -- |
| | FT carbon | 2 | 5 | 10 | 5 | 2 | 2 | 2 | 2 | -- | 2 |
| | Silicone rubber *10 | 2 | 2 | 2 | 2 | 2 | 2 | 2 | -- | 2 | -- |
| | Trimethylolpropane trimethacrylate | 4 | 4 | 4 | 4 | 4 | 4 | 4 | 4 | 4 | 2 |
| | Composite antioxidant *11 | 1 | 1 | 1 | 1 | 1 | 1 | 1 | 1 | -- | 1 |
| | Phenolic antioxidant *12 | 2 | 2 | 2 | 2 | 2 | 2 | 2 | 2 | -- | 1 |
| | Zinc stearate | 1 | 1 | 1 | 1 | 1 | 1 | 1 | 1 | -- | 1 |
| | VA content of base polymer (%) | 26.5 | 26 | 26.5 | 26.5 | 26.5 | 26.5 | 26.5 | 48.9 | 25.1 | 7 |
| Properties | Initial tensile test | O | O | O | O | O | O | × | O | × | O |
| | Heat resistance test | O | O | O | O | O | O | O | O | O | O |
| | Oil resistance test | O | O | O | O | O | O | O | O | O | O |
| | Low-temperature test | O | O | O | O | O | × | O | × | × | O |
| | Combustion test | O | O | O | O | O | O | O | O | O | O |
| | Smoke emission test | O | O | O | O | O | O | O | O | O | O |
| | Flexibility test | O | O | O | O | O | O | O | O | O | × |
| | Presence/absence of die buildup | O | O | O | O | O | O | O | × | O | O |
| | Cold resistance test | O | O | O | O | O | O | O | O | × | O |
| | Contact angle test | O | O | O | O | O | O | O | O | O | O |
| | Total evaluation | O | O | O | O | O | × | × | × | × | × |

1) Evolue SP1510 (produced by Prime Polymer Co., Ltd.; "Evolue" is a registered trademark.)

2) Evaflex EV260 (produced by Du Pont-Mitsui Polychemicals Co., Ltd.; "Evaflex" is a registered trademark.)

3) Evaflex 45X(produced by Du Pont-Mitsui Polychemicals Co., Ltd.; "Evaflex" is a registered trademark.)

4) Levapren 600 (produced by LANXESS; "Levapren" is a registered trademark.)

5) TAFMER MH5040 (produced by Mitsui Chemicals, Inc.; "TAFMER" is a registered trademark.)

6) TAFMER MH7020 (produced by Mitsui Chemicals, Inc.; "TAFMER" is a registered trademark.)

7) Magseeds S4 (produced by Konoshima Chemical Co., Ltd.; "Magseeds" is a registered trademark.)
8) Magnifin H10A (produced by Albemarle Corporation; "Magnifin" is a registered trademark.)
9) Magnifin H10C (produced by Albemarle Corporation; "Magnifin" is a registered trademark.)
10) HT-KE76S (produced by Shin-Etsu Chemical Co., Ltd.)
11) AO-18 (produced by ADEKA CORPORATION)
12) IRGANOX 1010 (produced by BASF Corporation; "IRGANOX" is a registered trademark.)
13) TAFMER MP0620 (produced by Mitsui Chemicals, Inc.; "TAFMER" is a registered trademark.)

As shown in Table 1, Example 1 to Example 5 were rated "○" in all of the evaluations, and thus were rated "○" in the total evaluation.

In contrast, Comparative Example 1 and Comparative Example 2 were rated "×" in low-temperature properties and initial tensile properties, respectively, since magnesium hydroxide was beyond the range of the present disclosure. Specifically, in Comparative Example 1, low-temperature properties were not good since silane-treated magnesium hydroxide was not added, whereas in Comparative Example 2, the target value was not satisfied in terms of initial elongation properties since fatty acid-treated magnesium hydroxide was not added.

Comparative Example 3 containing, as a main component, ethylene-vinyl acetate copolymer having a high vinyl acetate content, was rated "×" in low-temperature properties, and occurrence of die buildup during sheath extrusion due to no addition of silicone rubber resulted in a defect in appearance.

Comparative Example 4 containing, as a main component, ethylene-vinyl acetate copolymer having a low vinyl acetate content, was rated "×" in initial tensile properties and low-temperature properties. Also, cracks occurred in the cold resistance test since Tg of acid-modified polyolefin resin was high.

Conventional Example 1 containing LLDPE as a main component was rated "×" in flexibility since the polymer had a high crystallinity.

Table 2 shows results of evaluation of insulated electric wires. In Table 2, the insulation layers of Examples 6 to 10 have the same respective compositions as the sheaths of Examples 1 to 5, the insulation layers of Comparative Examples 5 to 8 have the same respective compositions as the sheaths of Comparative Examples 1 to 4, and the insulation layer of Conventional Example 2 has the same composition as the sheath of Conventional Example 1.

Since the methods for the evaluation tests are the same as those employed for the cables, only differences will be discussed, and further detailed description will not be provided here. Although a weight of 0.5 kg was used in the flexibility test of the cables, a weight of 0.3 kg was used in the flexibility test of insulated electric wires.

As seen from Table 2, the evaluation results of the insulated electric wires are similar to the evaluation results of the cables.

[Table 2]

| | Item | | Examples | | | | | Comparative Examples | | | | Conventional Example |
|---|---|---|---|---|---|---|---|---|---|---|---|---|
| | | | 6 | 7 | 8 | 9 | 10 | 5 | 6 | 7 | 8 | 2 |
| Composition of insulation layer of insulated electric wire | LLDPE *1 | | — | — | — | — | — | — | — | — | — | 60 |
| | Ethylene vinyl acetate copolymer (vinyl acetate amount: 14% by mass) | | — | — | — | — | — | — | — | — | 64 | — |
| | Ethylene vinyl acetate copolymer (vinyl acetate amount: 28% by mass) *2 | | 70 | 60 | 70 | 70 | 70 | 70 | 70 | — | — | — |
| | Ethylene vinyl acetate copolymer (vinyl acetate amount: 46% by mass) *3 | | 15 | 20 | 15 | 15 | 15 | 15 | 15 | 15 | 35 | 15 |
| | Ethylene vinyl acetate copolymer (vinyl acetate amount: 60% by mass) *4 | | — | — | — | — | — | — | — | 70 | — | — |
| | Maleic acid-modified polyolefin (Tg: -65°C) *5 | | — | — | — | — | — | — | — | 15 | — | 25 |
| | Maleic acid-modified polyolefin (Tg: -65°C) *6 | | 15 | 20 | 15 | 15 | — | 15 | 15 | — | — | — |
| | Maleic acid-modified polyolefin (Tg: -55°C) *13 | | — | — | — | — | 15 | — | — | — | — | — |
| | Maleic acid-modified polyolefin (Tg: -50°C) | | — | — | — | — | — | — | — | — | 1 | — |
| | Silane and fatty acid-treated magnesium hydroxide *7 | | — | — | — | 200 | — | — | — | 200 | — | 180 |
| | Silane-treated magnesium hydroxide *8 | | 80 | 80 | 80 | — | 80 | — | 200 | — | 100 | — |
| | Fatty acid-treated magnesium hydroxide *9 | | 120 | 120 | 120 | — | 120 | 200 | — | — | 150 | — |
| | PT carbon | | 2 | 5 | 10 | 5 | 2 | 2 | 2 | 2 | — | 2 |
| | Silicone rubber *10 | | 2 | 2 | 2 | 2 | 2 | 2 | 2 | — | 2 | — |
| | Trimethylolpropane trimethacrylate | | 4 | 4 | 4 | 4 | 4 | 4 | 4 | 4 | 4 | 2 |
| | Composite antioxidant *11 | | 1 | 1 | 1 | 1 | 1 | 1 | 1 | 1 | — | 1 |
| | Phenolic antioxidant *12 | | 2 | 2 | 2 | 2 | 2 | 2 | 2 | 2 | — | 1 |
| | Zinc stearate | | 1 | 1 | 1 | 1 | 1 | 1 | 1 | 1 | — | 1 |
| | VA content of base polymer (%) | | 26.5 | 26 | 26.5 | 26.5 | 26.5 | 26.5 | 26.5 | 48.9 | 25.1 | 7 |
| Properties | Initial tensile test | | O | O | O | O | O | O | × | O | × | O |
| | Heat resistance test | | O | O | O | O | O | O | O | O | O | O |
| | Oil resistance test | | O | O | O | O | O | O | O | O | O | O |
| | Low-temperature test | | O | O | O | O | O | × | O | × | × | O |
| | Combustion test | | O | O | O | O | O | O | O | O | O | O |
| | Smoke emission test | | O | O | O | O | O | O | O | O | O | O |
| | Flexibility test | | O | O | O | O | O | O | O | O | O | × |
| | Presence/absence of die buildup | | O | O | O | O | O | O | O | × | O | O |
| | Cold resistance test | | O | O | O | O | O | O | O | O | × | O |
| | Contact angle test | | O | O | O | O | O | O | O | O | O | O |
| | Total evaluation | | O | O | O | O | O | × | × | × | × | × |

**Claims**

1. An insulated electric wire (10) comprising:

a conductor (11); and
an insulation layer (12) provided on an outer circumference of the conductor (11),
wherein the insulation layer (12) comprises:

a base polymer comprising ethylene-vinyl acetate copolymer, the base polymer having a vinyl acetate content of 25% by mass or more and less than 50% by mass; and
a metal hydroxide comprising magnesium hydroxide,

wherein the insulation layer (12) has:

tensile properties such that a tensile strength is 10 MPa or more and a tensile elongation is 125% or more in an initial tensile test in accordance with EN60811-1-1 ;
a heat resistance such that a tensile strength change rate is within ±30% and a tensile elongation change rate is within ±40% in a heat resistance test in accordance with EN60811-1-2;
an oil resistance such that an elongation change rate is within ±40% in an oil resistance test in accordance with EN60811-2-1; and
low-temperature properties such that a tensile elongation is 30% or more in a low-temperature test in accordance with EN60811-1-4, and

wherein the insulated electric wire (10) has:

a flame retardancy such that, in a combustion test in accordance with IEC60332-1, a distance from a bottom of an upper holder to a carbonized portion of the insulated electric wire (10) is 50 mm or more in an upper part of the insulated electric wire (10) and 540 mm or less in a lower part of the insulated electric wire (10);
low smoke emission properties such that a transmissivity is 70% or more in a smoke emission test in accordance with EN61034-2;
a flexibility such that, when the insulated electric wire (10) is placed on a test stand so as to extend out by 1 m at one end of the insulated electric wire (10) and a weight of 0.3 kg is hung from the one end, a displacement amount of the one end is 100 mm or more; and
a cold resistance such that, when a bending test is performed at -40°C in accordance with EN60811-1-48.1, the insulated electric wire (10) after being wound exhibits no cracks.

2.  A cable (20) comprising:

at least one insulated electric wire (10) comprising:

a conductor (11); and
an insulation layer (12a, 12b) provided on an outer circumference of the conductor (11); and

a sheath (23) provided around the at least one insulated electric wire (10),
wherein the sheath (23) comprises:

a base polymer comprising ethylene-vinyl acetate copolymer, the base polymer having a vinyl acetate content of 25% by mass or more and less than 50% by mass; and
a metal hydroxide comprising magnesium hydroxide,

wherein the sheath (23) has:

tensile properties such that a tensile strength is 10 MPa or more and a tensile elongation is 125% or more in an initial tensile test in accordance with EN60811-1-1;
a heat resistance such that a tensile strength change rate is within ±30% and a tensile elongation change rate is within ±40% in a heat resistance test in accordance with EN60811-1-2;
an oil resistance such that an elongation change rate is within ±40% in an oil resistance test in accordance with EN60811-2-1; and
low-temperature properties such that a tensile elongation is 30% or more in a low-temperature test in accordance with EN60811-1-4, and

wherein the cable (20) has:

a flame rctardancy such that, in a combustion test in accordance with IEC60332-1, a distance from a bottom of an upper holder to a carbonized portion of the cable (20) is 50 mm or more in an upper part of the cable (20) and 540 mm or less in a lower part of the cable (20);

low smoke emission properties such that a transmissivity is 70% or more in a smoke emission test in accordance with EN61034-2;

a flexibility such that, when the cable (20) is placed on a test stand so as to extend out by 1 m at one end of the cable (20) and a weight of 0.5 kg is hung from the one end, a displacement amount of the one end is 100 mm or more; and

a cold resistance such that, when a bending test is performed at -40°C in accordance with EN60811-1-48.1, the cable (20) after being wound exhibits no cracks.

3. The cable (20) according to claim 2, wherein the at least one insulated electric wire (10) comprises a plurality of insulated electric wires (10).

4. The cable (20) according to claim 3, wherein a metal braid layer (22) is provided around the plurality of insulated electric wires (10).

5. The cable (20) according to any one of claims 2 to 4, wherein an ethylene-vinyl acetate copolymer content of the base polymer is 70% by mass or more.

6. The cable (20) according to any one of claims 2 to 5, wherein the base polymer comprises an acid-modified polyolefin resin having a glass transition temperature (Tg) of -55°C or less by the DSC method.

7. The cable (20) according to claim 6, wherein the acid-modified polyolefin resin is a polyolefin resin grafted with maleic anhydride or a copolymer of polyolefin and maleic anhydride.

8. The cable (20) according to claim 6 or 7, wherein an addition amount of the acid-modified polyolefin resin is 0 parts by mass or more to 30 parts by mass or less relative to 100 parts by mass of the base polymer.

9. The cable (20) according to any one of claims 6 to 8, wherein a content of the ethylene-vinyl acetate copolymer and the acid-modified polyolefin resin in the base polymer is 90% by mass or more.

10. The cable (20) according to any one of claims 2 to 4, wherein the vinyl acetate content in the base polymer is obtained by Formula (1) below when the number of types of polymers to be used for the base polymer is 1, 2, 3, ... k, ..., n,

$$\text{(VA content in the base polymer)} = \sum_{k=1}^{n} X_k Y_k \quad \cdots (1)$$

wherein in Formula (1), X is a VA content (% by mass) of a polymer k, Y is a ratio of the polymer k relative to the entire base polymer, and "k" is a natural number.

11. The cable (20) according to any one of claims 2 to 4, wherein 150 to 200 parts by mass of the metal hydroxide is added to 100 parts by mass of the base polymer.

12. The cable (20) according to any one of claims 2 to 4, wherein 0.5 to 10 parts by mass of silicone rubber is added to 100 parts by mass of the base polymer.

FIG.1

FIG.2

Europäisches
Patentamt

European
Patent Office

Office européen
des brevets

# EUROPEAN SEARCH REPORT

Application Number

EP 16 18 6763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/030853 A1 (IWASAKI MAKOTO [JP] ET AL) 29 January 2015 (2015-01-29) * paragraph [0001] - paragraph [0062]; claims 1-8; examples 1-6; table 1 * ----- | 1-12 | INV. H01B3/44 C08K3/22 H01B7/18 H01B7/29 |
| X | US 2014/370315 A1 (IWASAKI MAKOTO [JP] ET AL) 18 December 2014 (2014-12-18) * paragraph [0001] - paragraph [0048]; claims 1-4; examples 1-3; table 1 * ----- | 1-12 | |
| X | US 2014/290976 A1 (NISHI HAJIME [JP] ET AL) 2 October 2014 (2014-10-02) * paragraph [0001] - paragraph [0054]; example 3; table 1 * ----- | 1-12 | |
| X | EP 1 000 981 A1 (SUMITOMO ELECTRIC INDUSTRIES [JP]) 17 May 2000 (2000-05-17) * page 1 - page 13; claims 1-20; examples 3-6; table 1 * ----- | 1-12 | |

TECHNICAL FIELDS
SEARCHED      (IPC)

H01B
C08K

The present search report has been drawn up for all claims

| Place of search | Date of completion of the search | Examiner |
|---|---|---|
| Munich | 9 January 2017 | Marsitzky, Dirk |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**

EP 16 18 6763

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2017

| Patent document cited in search report | | Publication date | Patent family member(s) | | Publication date |
|---|---|---|---|---|---|
| US 2015030853 | A1 | 29-01-2015 | CN | 104341671 A | 11-02-2015 |
| | | | JP | 5733352 B2 | 10-06-2015 |
| | | | JP | 2015021120 A | 02-02-2015 |
| | | | US | 2015030853 A1 | 29-01-2015 |
| US 2014370315 | A1 | 18-12-2014 | CN | 104240809 A | 24-12-2014 |
| | | | JP | 5972836 B2 | 17-08-2016 |
| | | | JP | 2015002062 A | 05-01-2015 |
| | | | US | 2014370315 A1 | 18-12-2014 |
| US 2014290976 | A1 | 02-10-2014 | CN | 104072854 A | 01-10-2014 |
| | | | JP | 5772854 B2 | 02-09-2015 |
| | | | JP | 2014191907 A | 06-10-2014 |
| | | | US | 2014290976 A1 | 02-10-2014 |
| EP 1000981 | A1 | 17-05-2000 | AU | 3954099 A | 20-12-1999 |
| | | | BR | 9906472 A | 02-01-2002 |
| | | | CA | 2298619 A1 | 09-12-1999 |
| | | | EP | 1000981 A1 | 17-05-2000 |
| | | | TW | 482803 B | 11-04-2002 |
| | | | US | 6436557 B1 | 20-08-2002 |
| | | | WO | 9963004 A1 | 09-12-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010097881 A